# EUROPÄISCHE PATENTSCHRIFT

(11) **EP 2 412 518 B1**
(45) Veröffentlichungstag und Bekanntmachung des Hinweises auf die Patenterteilung: **21.08.2013**
(21) Anmeldenummer: 11004174.6
(22) Anmeldetag: 20.05.2011
(51) Int. Cl.: B32B 1/08, B32B 27/32, F16L 11/00, F16L 11/04, F16L 11/06, F16L 11/08, F16L 11/10

(54) **Schlauchleitung, insbesondere für Sanitäranwendungen, sowie Schlauchanordnung**
Tube conduit, in particular for sanitary purposes, and tube arrangement
Conduite en tuyaux flexibles, notamment pour applications sanitaires, et agencement de tuyau flexible

(30) Priorität: 26.07.2010 DE 202010010668 U
(43) Veröffentlichungstag der Anmeldung: 01.02.2012
(73) Patentinhaber: Rehau AG + Co, 95111 Rehau (DE)
(72) Erfinder: Wazlawik, Klaus, 95030 Hof (DE); Biedermann, Armin, 95131 Schwarzenbach am Wald (DE); Beyer, Klaus, 95111 Rehau (DE); Zahn, Cornelia, 08529 Plauen (DE)

(56) Entgegenhaltungen:
- EP-A1- 0 041 361
- EP-A1- 1 260 528
- EP-A1- 1 260 546
- EP-A1- 1 630 197
- EP-A1- 1 683 631
- WO-A1-97/33117
- WO-A1-2007/023996
- DE-A1- 19 719 593
- DE-U1-202007 006 224
- US-A1- 2010 071 795

## Beschreibung

Die Erfindung betrifft die Verwendung einer flexiblen Schlauchleitung, insbesondere für Sanitäranwendungen, mit einer Innenschicht, deren innere Oberfläche einen freien Querschnitt für den Transport eines zu führenden Fluids begrenzt.

Innenschläuche von beispielsweise metall- oder kunststoffarmierten Sanitärarmaturen-Anschlussschläuchen (Panzerschläuche, Brauseschläuche etc.) bestehen in der Regel aus weichmacherfreien Polymerwerkstoffen, um die Anforderungen hinsichtlich der Vermeidung von Biofilmbildung zu gewährleisten. Hierzu werden im Stand der Technik entweder sehr teuere Spezialelastomere, beispielsweise auf Basis Silikonkautschuk, oder semiflexible Ethylen-Alpha-Olefin-Copolymere eingesetzt. Ein derartiger Schlauch für den Transport von Trinkwasser ist beispielsweise aus der DE 20 2007 006 224 U1 bekannt. Zur Sicherstellung der thermischen Standzeiteigenschaften ist es ferner bekannt, eine physikalische oder chemische (peroxidisch oder silan-basierend) Vernetzung durchzuführen, so wie beispielsweise in der DE 20 2007 006 224 U1 beschrieben.

Nachteilig bei den im Stand der Technik eingesetzten Materialien ist einerseits der sehr hohe Preis der verwendeten Spezialelastomere. Zudem besteht bei peroxidisch vernetzten Elastomeren ein hohes Risiko der Beeinträchtigung organoleptischer Eigenschaften. Die genannten semiflexiblen Ethylen-Alpha-Olefin-Copolymere sind hingegen insbesondere bei größeren Nenndurchmessern ab etwa 7 mm nicht so biegeflexibel wie konventionelle Elastomerwerkstoffe, so dass beim Anschließen der Verbindungsschläuche ein höherer Kraft- und Handhabungsaufwand erforderlich ist. Weiterhin werden ggf. aus der Fertigung stammende Krümmungen der Schlauchform, beispielsweise aufgrund von Bundwicklungen, am Endprodukt fixiert, wodurch sich ebenfalls Montagenachteile ergeben. Schließlich sind auch die thermischen Standzeiteigenschaften aufgrund der vergleichsweise niedrigen Schmelztemperaturen im Bereich von 95 °C bis 110 °C begrenzt, wobei gerade noch der Prüftemperaturbereich der DIN EN 13618 (aktueller Entwurf) oder Arbeitsblatt DVGW W 543 von 90 °C bis 93 °C abgedeckt werden können, nicht aber höhere Prüftemperaturen im Bereich von 99 °C oder darüber.

Vor diesem Hintergrund liegt der Erfindung die Aufgabe zugrunde, eine Schlauchleitung mit den eingangs beschriebenen Merkmalen anzugeben, welche kostengünstig herstellbar ist, eine hohe Flexibilität aufweist und außerdem gute thermische Standzeiteigenschaften gewährleistet.

Erfindungsgemäß wird die Aufgabe durch die Merkmale des Anspruch 1 gelöst. Vorzugsweise beträgt der Gewichtsanteil der Block-Copolymere in der Schicht mindestens 80 %, zweckmäßigerweise mindestens 95 %. Im Rahmen der Erfindung liegt es , dass die Schicht vorzugsweise aus diesen genannten Block-Copolymeren besteht.

Block-Copolymere bestehen aus längeren Sequenzen oder Blöcken jedes Monomers (z.B. AABBAA...; AAABBBAAA...; AAAAAAAAABBBBBBBBBBBB...). Je nach Größe der einzelnen Blöcke spricht man auch von Diblock-, Triblock-, ...,Copolymeren. Somit liegt es z.B. auch im Rahmen der Erfindung, dass die Schicht Alpha-Olefin-Diblock-Copolymere und/oder Alpha-Olefin-Triblock-Copolymere enthält.

Die Alpha-Olefin-Block-Copolymere werden im Stand der Technik pri-mär zur Herstellung von Folien eingesetzt. Überraschenderweise erfüllen nun aber gerade diese Copolymere die in der Aufgabenstellung genannten Anforderungen in nahezu idealer Weise. Aufgrund der erfindungsgemäß verwendeten Alpha-Olefin-Block-Copolymere werden Flexibilität und Biegsamkeit der Schlauchleitung erheblich verbessert, wodurch insbesondere auch Ausführungen mit größeren Nenndurchmessern von beispielsweise 8 bis 10 mm und mehr mit guten Handhabungs- und Montageeigenschaften herstellbar sind. Außerdem werden durch den Einsatz des erfindungsgemäßen Materials die Wärmestandzeiteigenschaften dahingehend verbessert, dass die Prüfbedingungen der Schlauchleitungen auf mehr als 99 °C angehoben werden können.

Im Rahmen der Erfindung liegt es ferner, dass die Schicht zusätzlich Alpha-Olefin-Copolymere enthält, beispielsweise mit einem Gewichtsanteil von mindestens 5 %, z.B. 15 - 25 %, wobei der Rest dann aus dem erfindungsgemäßen Alpha-Olefin-Block-Copolymer ausgewählt sein kann.

Im Rahmen der Erfindung liegt es auch, dass die Copolymere der Schicht chemisch und/oder physikalisch vernetzt sind. So kann beispielsweise eine Vernetzung der Alpha-Olefin-Block-Copolymere untereinander erfolgen, ebenso wie eine Vernetzung der Alpha-Olefin-Copolymere untereinander und insbesondere natürlich auch eine Vernetzung der Alpha-Olefin-Block-Copolymere mit Alpha-Olefin-Copolymeren.

Gemäß einer Ausführungsform der Erfindung entspricht die Schicht der Innenschicht. Insbesondere kann die Schlauchleitung lediglich aus der Schicht mit Alpha-Olefin-Block-Copolymeren ausgebildeten Innenschicht bestehen. Im Rahmen der Erfindung liegt es aber auch, dass zusätzlich eine Außenschicht vorgesehen ist. Die Außenschicht besteht zweckmäßigerweise ebenfalls aus einem Polymer, z.B. Polyethylen, Polypropylen, Polyvinylchlorid oder einer Mischung von mindestens zwei der genannten Materialien. Ferner kann auch die Außenschicht als Schicht ausgebildet sein. Darüber hinaus liegt es im Rahmen der Erfindung, dass mehrere Schichten vorgesehen sind, z.B. Innen- und Außenschicht, Innen- und eine Zwischenschicht oder Außenschicht und eine Zwischenschicht oder aber auch zwei Zwischenschichten.

Ferner kann zwischen Innen- und Außenschicht eine Armierungsschicht vorgesehen sein. Die Armierungsschicht dient in der Regel zur mechanischen Verstärkung der Schlauchleitung und kann Filamente enthalten. So kann sie z.B. aus einem Gewebe, einem Geflecht, einem Gewirk, einem Gestrick oder einem Tricot-Band bestehen und z.B. gitterförmig ausgebildet sein. Als Armierungsmaterialien können z.B. Polymere, insbesondere Polyester, Polyamid oder Polyacrylnitril, Cellulose, Glas, Metall (insbesondere Edelstahl) und Kohlenstoff verwendet werden.

Im Rahmen der Erfindung liegt es auch, dass die Innenschicht aus einem polymeren Material, insbesondere einem Polyethylen, einem Ethylen/Vmylacetat(EVA)-Copolymer oder einem EAC-Copolymer besteht bzw. eines oder mehrere dieser Materialien enthält. Als Polyethylen kommen z.B. LLDPE und/oder LDPE und/oder MDPE und/oder HDPE in Betracht. In diesem Fall umgibt die erfindungsgemäße Schicht die Innenschicht und kann z.B. die Außenschicht bilden. Zweckmäßigerweise grenzt die Schicht hierbei direkt an die Innenschicht an. Die Schicht kann auch als Zwischenschicht ausgebildet und ihrerseits dann von der bereits beschriebenen Armierungsschicht umgeben sein. Im Rahmen der Erfindung liegt es ferner, dass die Armierungsschicht von einer Außenschicht umgeben ist, die z.B. zusätzlich auch als Schicht ausgebildet ist.

Es liegt im Rahmen der Erfindung, dass die Schlauchleitung mit einer Metall- oder Kunststoffarmierung umgeben wird. Bei der Metall- bzw. Kunststoffarmierung kann es sich insbesondere um ein Geflecht handeln, welches beispielsweise beim Einsatz einer derartigen Schlauchanordnung als Panzerschlauch, Brauseschlauch etc. zweckmäßig ist.

### Ausführungsbeispiel 1:

Im Ausführungsbeispiel 1 besteht die Innenschicht zu 100 % aus einem Ethylen-Alpha-Olefin-Block-Copolymer mit MFR (Melt-Flow-Rate, DIN EN ISO 1133, 190 °C, 2,16 kg) von 1,0 g/10 min und Schmelztemperatur (DIN EN ISO 11357, 10 K/min) von 120 °C.

### Ausführungsbeispiel 2:

In der Ausführungsform besteht die Innenschicht zu 80 Gew.-% aus Ethylen-Alpha-Olefin-Block-Copolymer mit MFR (DIN EN ISO 1133, 190 °C, 2,16 kg) von 1,0 g/10 min und Schmelztemperatur (DIN EN ISO 11357, 10 K/min) von 120 °C und 20 Gew.-% PE-LD mit MFR (DIN EN ISO 1133, 190 °C, 2,16 kg) von 0,25 g/10 min und Schmelztemperatur (DIN EN ISO 11357, 10 K/min) von 108 °C.

Nach der Vernetzung wurde für das Ausführungsbeispiel 1 eine Hot-Set-Dehnung (Anlehnung an EN 60811-2-1) von 35 bis 50 % sowie ein Vernetzungsgrad (Anlehnung an DIN EN 579) von 88 bis 90 %, für Ausführungsbeispiel 2 eine Hot-Set-Dehnung (Anlehnung an EN 60811-2-1) von 65 bis 76 %, sowie ein Vernetzungsgrad (Anlehnung an DIN EN 579) von 81 bis 83 % ermittelt.

Weitere Ausführungsformen der Erfindung sind in der folgenden Tabelle 1 dargestellt, jeweils links beginnend mit der Innenschicht, Angaben jeweils in Gew-%, OBC = Alpha-Olefin-Block-Copolymer:

| Beispiel | Innenschicht | weitere Schicht | Armierung | weitere Schicht |
|---|---|---|---|---|
| I (unarmiert) | 100 % OBC | - | - | - |
| II (unarmiert) | PE oder EVA-Copolymer oder EAC-Copolymer | 100 % OBC | - | - |
| III (unarmiert) | ≥ 70% OBC + 5 ÷ 30% PE | - | - | - |
| IV (unarmiert) | PE oder EVA-Copolymer oder EAC-Copolymer | ≥ 70% OBC + 5 ÷ 30% PE | - | - |
| V (armiert) | 100% OBC | - | + * | 100% OBC |
| VI (armiert) | ≥ 70% OBC + 5 ÷ 30% PE | - | + * | 100% OBC |
| VII (armiert) | ≥ 70% OBC + 5 - 30% PE | - | + * | ≥ 70% OBC + 5 ÷ 30% PE |
| VIII (armiert) | PE oder EVA-Copolymer oder EAC-Copolymer | 100% OBC | + * | 100% OBC |
| IX (armiert) | PE oder EVA-Copolymer oder EAC-Copolymer | ≥ 70% OBC + 5 ÷ 30% PE | + * | 100% OBC |
| X (armiert) | PE oder EVA-Copolymer oder EAC-Copolymer | ≥ 70% OBC + 5 ÷ 30% PE | + * | ≥ 70% OBC + 5 ÷ 30%PE |

| | | | | |
|---|---|---|---|---|
| * Aufbau s. Tabelle 2 (Material, Typ und Ausführung können beliebig kombiniert werden) : | | | | |

| Armierungsmaterial | Armierungstyp | Armierungsausführung |
|---|---|---|
| - Polymer, z.B. Polyester, | - Filament | - diagonal, gewickelt |
| Polyamid oder PAN | - Draht, ein- oder mehr- | - diagonal, geflochten |
| - Cellulose | schichtig | - Tricot-Armierung |
| - Glas | - Gewebe-Band | - Strick-Armierung |
| - Metall, insbes. Edelstahl | - Gewirk-Band | - Bandagierung, diagonal |
| - Kohlenstoff | - Gestrick-Band | - Bandagierung, längs |
| - Seide | - Tricot-Band | |

Ganz allgemein ist die erfindungsgemäße Lehre beispielsweise für Inliner-Schläuche, für metall- oder kunststoffarmierte Sanitärarmaturen-Anschlussschläuche (Panzerschläuche, Brauseschläuche für beispielsweise Küche und Bad) geeignet, darüber hinaus insbesondere als unvernetzte Ausführung für armierte und unarmierte Trinkwasserschläuche im Bereich Schausteller, Gastronomie, sonstige mobile Trinkwasserversorgung im Normenbereich der DIN 2001/2 (Caravans, Schiffe, Flugzeuge, Eisenbahnen).

Im Folgenden wird die Erfindung anhand einer lediglich ein Ausführungsbeispiel darstellenden Zeichnung erläutert. Es zeigen schematisch:
Figur 1 eine erfindungsgemäße Schlauchleitung in einer Querschnittsdarstellung und
Figur 2 eine weitere Ausführungsform der Erfindung.

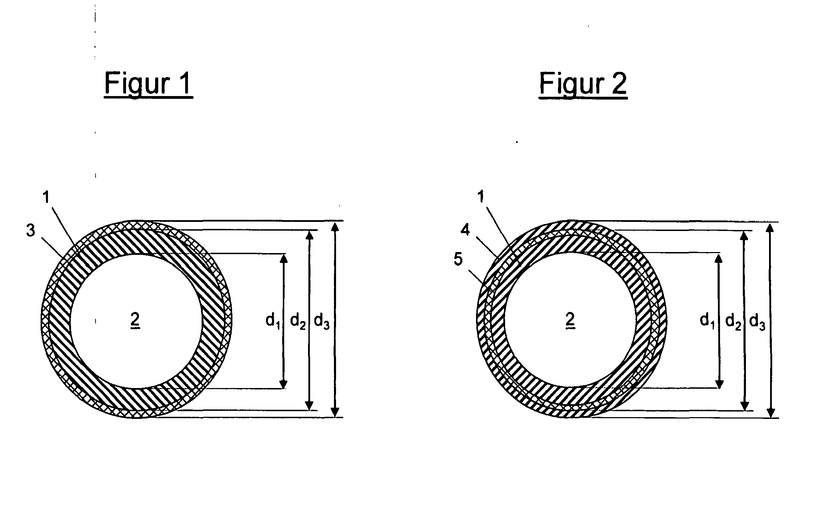

Die Figur 1 zeigt eine Schlauchleitung für eine Sanitäranwendung mit einer Innenschicht 1, deren innere Oberfläche einen freien Querschnitt 2 für den Transport eines zu führenden Fluids begrenzt. Die Innenschicht besteht zu 80 Gew.-% aus einem Ethylen-Alpha-Olefin-Block-Copolymer und zu 20 Gew.-% aus einem Alpha-Olefin-Copolymer. Die Copolymere der Innenschicht 1 sind untereinander physikalisch vernetzt. Im Ausführungsbeispiel besteht die Schlauchleitung lediglich aus der Innenschicht 1. Darüber hinaus ist eine die Schlauchleitung 1 umgebende Armierung 3, z.B. in Form eines Geflechtes, vorgesehen. Die Armierung 3 kann aus Metall oder aber auch aus Kunststoff bestehen, wobei die Armierung 3 im Nachgang mit einer Kunststoffummantelung, z.B. aus PVC, versehen sein kann. Im Rahmen der Erfindung liegt es auch, dass die Armierung 3 als Metallgliederschlauch ausgebildet ist. Bei der Montage wird die Schlauchleitung 1 in die Armierung 3 eingeschoben. Derartige Schlauchanordnungen werden im Allgemeinen als Panzerschläuche bezeichnet und finden insbesondere im Sanitärbereich, z.B. für Armaturen oder als Brauseschlauch, oder auch bei Anschluss von Haushaltsgeräten (z.B. Spülmaschinen etc.) Anwendung. Zu diesem Zweck weisen die beiden Enden der Schlauchleitung zweckmäßigerweise Anschlussstücke (nicht näher dargestellt) angebracht. Die in der Figur dargestellten Durchmesser d₁ des freien Querschnitts, d₂ des Außendurchmessers der Schlauchleitung bzw. Innenschicht 1 und d₃ des Außendurchmessers der Armierung 3 betragen zweckmäßigerweise d₁ = 5,8 - 12,5 mm, d₂ = 7,4 = 16,5 mm, d₃ = 8,2 ÷ 18,1 mm.

Bei der in Figur 2 dargestellten Schlauchleitung ist neben der Innenschicht 1 eine Außenschicht 4 sowie eine zwischen diesen beiden Schichten 1, 4 angeordnete Armierungsschicht 5 vorgesehen, die zur mechanischen Verstärkung dient (vergl. Beispiele V - VII in Tabelle 1). Derartige Schlauchleitungen werden beispielsweise im Zusammenhang mit der Trinkwasserversorgung in Caravans oder aber auch als Brauseschlauch im Sanitärbereich eingesetzt.

## Patentansprüche

1. Verwendung einer flexiblen Schlauchleitung
- mit einer Innenschicht (1), deren innere Oberfläche einen freien Querschnitt (2) für den Transport eines zu führenden Fluids begrenzt,
- wobei mindestens eine Schicht vorgesehen ist, die zur Herstellung von Folien geeignete Ethylen-Alpha-Olefin-Block-Copolymere enthält,
- und wobei der Gewichtsanteil der Ethylen-Alpha-Olefin-Block-Copolymere in der Schicht mindestens 50 %, z.B. mindestens 70 % beträgt,
für Sanitäranwendungen.

2. Verwendung nach Anspruch 1, **dadurch gekennzeichnet, dass** die Schicht zusätzlich Alpha-Olefin-Copolymere enthält.

3. Verwendung nach Anspruch 1 oder 2, **dadurch gekennzeichnet, dass** die Copolymere der Schicht chemisch und/oder physikalisch vernetzt sind.

4. Verwendung nach einem der Ansprüche 1 bis 3, **dadurch gekennzeichnet, dass** zusätzlich eine Außenschicht (4) vorgesehen ist.

5. Verwendung nach Anspruch 4, **dadurch gekennzeichnet, dass** zwischen Innen- und Außenschicht (1,4) eine Armierungsschicht (5) angeordnet ist.

6. Verwendung nach Anspruch 5, **dadurch gekennzeichnet, dass** die Armierungsschicht (5) Filamente enthält.

7. Verwendung nach einem der Ansprüche 1 bis 6, **dadurch gekennzeichnet, dass** die Schicht der Innenschicht (1) entspricht.

8. Verwendung nach Anspruch 7, **dadurch gekennzeichnet, dass** die Schlauchleitung lediglich aus der Innenschicht (1) besteht.

9. Verwendung nach einem der Ansprüche 1 bis 6, **dadurch gekennzeichnet, dass** die Innenschicht (1) aus einem polymeren Material, insbesondere einem PE, einem EVA-Copolymer oder einem EAC-Copolymer besteht, und die Schicht die Innenschicht (1) umgibt.

10. Verwendung nach Anspruch 9, **dadurch gekennzeichnet, dass** die Schicht direkt an die Innenschicht (1) angrenzt.

## Claims

1. Use of flexible piping
- with an internal layer (1) of which the interior surface delimits a cross section (2) available for the transport of a fluid to be conducted,
- where there is at least one specific layer which comprises ethylene-alpha-olefin block copolymers suitable for producing foils,
- and where the proportion by weight of the ethylene-alpha-olefin block copolymers in the specific layer is at least 50%, for example at least 70%,
for sanitary applications.

2. Use according to Claim 1, **characterized in that** the specific layer also comprises alpha-olefin copolymers.

3. Use according to Claim 1 or 2, **characterized in that** the copolymers of the specific layer have chemical and/or physical crosslinking.

4. Use according to any of Claims 1 to 3, **characterized in that** there is also an external layer (4).

5. Use according to Claim 4, **characterized in that** the arrangement has a reinforcing layer (5) between internal layer and external layer (1, 4).

6. Use according to Claim 5, **characterized in that** the reinforcing layer (5) comprises filaments.

7. Use according to any of Claims 1 to 6, **characterized in that** the specific layer corresponds to the internal layer (1).

8. Use according to Claim 7, **characterized in that** the piping is composed only of the internal layer (1).

9. Use according to any of Claims 1 to 6, **characterized in that** the internal layer (1) is composed of a polymeric material, in particular a PE, an EVA copolymer or an EAC copolymer, and the specific layer surrounds the internal layer (1).

10. Use according to Claim 9, **characterized in that** the specific layer is directly adjacent to the internal layer (1).

## Revendications

1. Utilisation d'une conduite en tuyaux flexibles
- avec une couche intérieure (1), dont la surface intérieure délimite une section transversale libre (2) pour le transport d'un fluide à conduire,
- dans laquelle il est prévu au moins une couche, qui contient des copolymères blocs d'éthylène et d'alpha-oléfines convenant pour la fabrication de feuilles,
- et dans laquelle la partie en poids des copolymères blocs d'éthylène et d'alpha-oléfines dans la couche vaut eu moins 50 %, par exemple au moins 70 %,
pour des applications sanitaires.

2. Utilisation selon la revendication 1, **caractérisée en ce que** la couche contient en outre des copolymères d'alpha-oléfines.

3. Utilisation selon la revendication 1 ou 2, **caractérisée en ce que** les copolymères de la couche sont réticulés chimiquement et/ou physiquement.

4. Utilisation selon l'une quelconque des revendications 1 à 3, **caractérisée en ce qu'**il est en outre prévu une couche extérieure (4).

5. Utilisation selon la revendication 4, **caractérisée en ce qu'**une couche d'armature (5) est disposée entre la couche intérieure (1) et la couche extérieure (4).

6. Utilisation selon la revendication 5, **caractérisée en ce que** la couche d'armature (5) contient des filaments.

7. Utilisation selon l'une quelconque des revendications 1 à 6, **caractérisée en ce que** la couche correspond à la couche intérieure (1).

8. Utilisation selon la revendication 7, **caractérisée en ce que** la conduite en tuyaux flexibles se compose uniquement de la couche intérieure (1).

9. Utilisation selon l'une quelconque des revendications 1 à 6, **caractérisée en ce que** la couche intérieure (1) se compose d'un matériau polymère, en particulier d'un PE, d'un copolymère EVA ou d'un copolymère EAC, et la couche entoure la couche intérieure (1).

10. Utilisation selon la revendication 9, **caractérisée en ce que** la couche est directement adjacente à la couche intérieure (1).
